# EUROPÄISCHE PATENTSCHRIFT

(11) **EP 2 887 330 B1**
(45) Veröffentlichungstag und Bekanntmachung des Hinweises auf die Patenterteilung: **21.09.2016**
(21) Anmeldenummer: 13197886.8
(22) Anmeldetag: 17.12.2013
(51) Int. Cl.: G08B 17/00, B08B 5/02

(54) **Verfahren und Vorrichtung zum Reinigen eines optischen Eintrittsfensters eines Brandmelders**
Method and device for cleaning an optical entrance window of a fire alarm
Procédé et dispositif de nettoyage d'une fenêtre d'entrée optique d'un détecteur d'incendie

(43) Veröffentlichungstag der Anmeldung: 24.06.2015
(73) Patentinhaber: Minimax GmbH & Co. KG, 23840 Bad Oldesloe (DE)
(72) Erfinder: Stamer, Arne, 23847 Siebenbäumen (DE)

(56) Entgegenhaltungen:
- WO-A1-2006/033828
- DE-A1- 19 652 107
- GB-A- 2 337 325
- GB-A- 2 477 763
- KR-A- 20100 013 083
- US-A1- 2003 210 906
- US-A1- 2012 030 901

## Beschreibung

Die Erfindung betrifft ein Verfahren zum Reinigen eines optischen Eintrittsfensters eines Brandmelders und eine Vorrichtung zum Reinigen eines optischen Eintrittsfensters.

Die Erfindung ist überall dort anwendbar, wo optische Eintrittsfenster von Brandmeldern für die Brandkenngrößen durchlässig bleiben müssen bzw. in vorgegebenen Abständen eine Reinigung der Scheibe erfolgen muss.

Unter dem Begriff des optischen Eintrittsfensters wird ein Eintrittsfenster aus einem Material verstanden, welches in ausreichendem Maße die Brandkenngröße, nämlich in Form elektromagnetischer Strahlung, zur Detektion von Brandkenngrößen in das Innere des Brandmelders zu Sensorelementen durchlässt. Das optische Eintrittsfenster kann hierbei durchlässig für Infrarotstrahlung, sichtbares Licht, und/oder UV-Strahlung sein, je nach den verwendeten Sensormitteln im Inneren des Brandmelders. Bisweilen wird das optische Eintrittsfenster mithin auch als Sichtscheibe bezeichnet, wenngleich es nicht in allen Fällen transparent ausgebildet sein muss.

Optische Eintrittsfenster von Brandmeldern gewähren nur eine einwandfreie Funktion, wenn durch diese Signale zu Sensorelementen gelangen können. In einer Umgebung, in der Staubpartikel oder Pulver als Schwebestoffe in der Umgebungsluft vorhanden sind, kommt es häufig dazu, dass das optische Eintrittsfenster des Brandmelders durch Schmutz- oder Pulverablagerungen verunreinigt wird, so dass Brandsignale nur ungenügend oder fehlerhaft zum Sensor des Brandmelders gelangen. Es ist daher erforderlich, die optischen Eintrittsfenster immer von Belag oder Verschmutzung freizuhalten.

Um den Verschmutzungsgrad von optischen Eintrittsfenstern zu überwachen, sind dem Fachmann unterschiedliche Möglichkeiten bekannt. In der Regel wird dabei eine Strahlung auf das optische Eintrittsfenster gesandt und die reflektierte und die durch das optische Eintrittsfenster gelangende Strahlung sensorisch gemessen und verglichen.

In DE 42 40 395 C2, US 5,914,489 A oder US 4,728,794 werden diese Verfahren und die entsprechenden Vorrichtungen beschrieben.

Um zu gewährleisten, dass die optischen Eintrittsfenster von Belag oder Verschmutzung freigehalten werden, wurden Brandmelder mit Luftspüleinrichtungen entwickelt, die einerseits dauerhaft ein Luftkissen vor dem Fenster aufbauen, um Ablagerungen von Prozessstoffen zu verhindern. Andererseits sind Druckspüleinrichtungen bekannt, um das Sichtfenster in regelmäßigen Abständen zu reinigen. Darüber hinaus kann die Reinigung auch mechanisch erfolgen.

All diese bekannten Möglichkeiten zur Reinigung des optischen Eintrittsfensters eines Brandmelders können nicht verhindern, dass es bei Pulvern oder Stäuben mit bestimmten Eigenschaften, in der Umgebung des Brandmelders dennoch zu Ablagerungen auf das optische Eintrittsfenster kommt, die nicht mit herkömmlichen Druckspüleinrichtungen oder einem Luftkissen entfernbar sind. Bei optischen Eintrittsfenstern, die mit einem Schutzgitter versehen sind, ist auch keine mechanische Reinigung ohne Probleme möglich, es sei denn, das Schutzgitter wird manuell entfernt und die optischen Eintrittsfenster mechanisch gereinigt.

All die genannten Vorrichtungen und Verfahren beschreiben Möglichkeiten, die optischen Eintrittsfenster eines Brandmelders mit einem kontinuierlichen Luftstrom bzw. Gasstrom zu reinigen.

Auf Grund des kontinuierlichen Luftverbrauches werden relativ niedrige Drücke verwendet. Dennoch summiert sich der Verbrauch derartiger Anlagen über den Zeitraum eines Jahres auf erhebliche Werte, besonders, wenn es sich um Anlagen mit mehreren Brandmeldern mit Luftspülung handelt. Druckluft gilt als einer der teuersten Energieträger, so dass für den Betreiber oft hohe Kosten entstehen. Dennoch ist die Reinigungswirkung der nach dem Stand der Technik bekannten Geräte oft unzureichend.

EP 2 381 430 B1 beschreibt ein Verfahren und eine Vorrichtung zum Reinigen eines optischen Eintrittsfensters eines Brandmelders, wobei ein pulsierender Gasstrom über die Oberfläche des optischen Eintrittsfensters geführt wird, bei dem ein rhythmisch entweichender oder pulsierender Gasstrom dadurch entsteht, dass zwischen einer elastischen Lippe und dem optischen Eintrittsfenster ein Druck aufgebaut wird und der pulsierende Gasstrom entweicht, indem die elastische Lippe auf das optische Eintrittsfenster schlägt.

Auch durch dieses Verfahren wird viel Druckluft verbraucht, da in regelmäßigen, nicht steuerbaren Abständen Druckluft entweicht. Weiterhin gelangt Druckluft immer nur waagerecht über das optische Eintrittsfenster. Dadurch, dass die Elastizität der Lippe sich über einen langen Zeitraum ändert können Undichtheiten entstehen, so dass sich die Reinigungswirkung verschlechtert oder im Falle eines Defektes ganz entfällt.

Das intermittierende Aufbringen eines Gas- oder Druckluftstromes auf das optische Eintrittsfenster des Brandmelders mit wählbarer Druckimpulsdauer und Druckimpulsfolge sowie unterschiedlicher und sehr hoher Intensität ist mit dieser Vorrichtung nicht möglich.

Das Dokument US 2012/030901 A1 offenbart ein Verfahren nach dem Obergriff des Anspruchs 1.

Ausgehend von diesem Stand der Technik ist daher Aufgabe der Erfindung, ein Verfahren und eine Vorrichtung zu entwickeln, mit der das optische Eintrittsfenster eines Brandmelders mit geringem Aufwand und gleichzeitig zuverlässig intermittierend von Staubpartikeln freigehalten wird.

Diese Aufgabe wird durch ein Verfahren nach den Merkmalen des ersten Patentanspruches und eine Vorrichtung nach den Merkmalen des Anspruches 8 gelöst. Unteransprüche geben vorteilhafte Ausgestaltungen der Erfindung wieder.

Das erfindungsgemäße Verfahren umfasst die folgenden Schritte:
- Abgeben eines intermittierenden Gasstroms aus zumindest einer Gasaustrittsöffnung (7) auf die Oberfläche des optischen Eintrittsfensters (1) des Brandmelders (2), wobei
- der intermittierende Gasstrom mit einer Anzahl von Druckimpulsen (14) auf das optische Eintrittsfenster (1) ausgebracht wird.

Mit anderen Worten wird der intermittierende Gasstrom aus der Gasaustrittsöffnung über die Oberfläche des optischen Eintrittsfensters des Brandmelders geführt. Es wird hierdurch ein intensiver intermittierender Gasstrom mit vorzugsweise einer Vielzahl von Druckimpulsen mit jeweils kurzer Zeitdauer t₁ auf das optische Eintrittsfenster ausgebracht, wobei mehrere Druckimpulse eine Druckimpulsserie mit einer Zeit t₂ zwischen zwei Druckimpulsen bilden und zwischen den Druckimpulsserien eine Pausenzeit t₃ besteht.

Das erfindungsgemäße Verfahren zum Reinigen eines optischen Eintrittsfensters eines Brandmelders sieht einen intermittierenden Gasstrom vor, der in vorgegebenen Zeitabständen mit hoher Intensität und kurzer Einwirkungszeit auf die Oberfläche des optischen Eintrittsfensters einwirkt. Der intermittierende Gasstrom wird durch Druckimpulse realisiert. Die Druckimpulse werden durch Schalten eines Ventils erzeugt, welches in einer Druckleitung angeordnet ist, welche ein Gasbereitstellungssystem, vorzugsweise ein Druckluftsystem, mit der mindestens einen Gasaustrittsöffnung verbindet und durch Schalten des Ventils diese Verbindung öffnet oder schließt.

Die Zeitabstände und die Einwirkungszeit der Druckimpulse werden durch eine Steuereinheit, wie beispielsweise eine Brandmelder- und/oder Löschsteuerzentrale und deren Software vorgegeben oder durch eine andere Steuerzentrale. Diese Vorgaben können in Abhängigkeit von der Verschmutzung erfolgen.

Die Steuereinheit sendet Steuersignale an das Ventil, um ein Öffnen und Schließen des Ventils zu schalten. Dies sind beispielsweise Spannungs- oder Stromsignale, abhängig von der jeweils gewählten Ventilart.

Für die Bereitstellung des intermittierenden Gasstroms wird Gas aus einem Gasbereitstellungssystem verwendet, welches das Gas mit einem gewünschten Druck über entsprechende Druckleitungen vom Gasbereitstellungssystem zu der mindestens einen Gasaustrittsöffnung fördert. In einer vorteilhaften Ausführung stellt das Gasbereitstellungssystem ein Druckluftsystem dar und das Gas ist dann vorzugsweise Druckluft.

Gemäß der Erfindung bilden mehrere Druckimpulse Druckimpulsserien mit einer Zeit zwischen zwei aufeinander folgenden Druckimpulsen einer Druckimpulsserie, wobei zwischen den Druckimpulsserien eine Pausenzeit besteht, und wobei zum Abgeben des Gasstroms aus der Gasaustrittsöffnung ein Ventil vorgesehen ist, das Verfahren ferner umfassend die Schritte:
- Schalten des Ventils in eine geöffnete Stellung für die Zeitdauer eines Druckimpulses,
- Schalten des Ventils in eine geschlossene Stellung für die Zeit zwischen zwei Druckimpulsen, und für die Pausenzeit zwischen zwei Druckimpulsserien, wobei diese Schaltschritte von einer Steuereinheit mittels Senden von korrespondierenden Steuersignalen von der Steuereinheit an das Ventil ausgeführt werden.
Der Begriff "Korrespondierende Steuersignale" bedeutet ein entsprechendes Steuersignal für Schalten des Ventils in eine geöffnete Stellung oder in eine geschlossene Stellung des Ventils. In der geöffneten Stellung des Ventils wird der unter Druck stehende Gasstrom, Richtung Gasaustrittsöffnung freigegeben, in geschlossener Stellung unterbrochen.

Der intermittierende Gasstrom wird vorzugsweise in mehreren kurzen Druckimpulsen mit hohem Druck und hoher Geschwindigkeit über eine oder mehrere Gasaustrittsöffnungen auf das optische Eintrittsfenster aus- oder aufgebracht. Unter einem "hohen" Druck wird hierbei ein Druck von bis zu 30 bar verstanden. Zwischen zwei aufeinander folgenden Druckimpulsen innerhalb einer Druckimpulsserie liegt vorzugsweise eine Zeit ohne Druckimpuls. Diese Zeit wird Zeit t₂ zwischen zwei Druckimpulsen genannt. Die Zeitdauer t₁ in dem der Druckimpuls wirkt und die Zeit t₂ zwischen zwei Druckimpulsen werden entsprechend der Anwendung vorbestimmt und können beispielsweise etwa gleich sein.

Zwischen zwei Druckimpulsserien besteht eine Pausenzeit t₃. Diese Pausenzeit trägt sehr wesentlich zum Absenken des Energieverbrauchs bzw. Gasverbrauchs bei.

Die Zeitdauer t₁ eines Druckimpulses, die Zeit t₂ zwischen zwei Druckimpulsen und die Pausenzeit t₃ zwischen zwei Druckimpulsserien werden vorzugsweise durch Senden von Steuersignalen einer Steuereinheit an ein Ventil realisiert. Vorzugsweise wird ein Magnetventil oder ein pneumatisches Ventil oder ein sonstiges Ventil verwendet.

In einer weiteren bevorzugten Ausführungsform wird die Zeitdauer t₁ eines Druckimpulses, die Zeit t₂ zwischen zwei Druckimpulsen und die Pausenzeit t₃ zwischen zwei Druckimpulsserien durch eine pneumatische Steuerung realisiert.

Vorteilhaft ist es, wenn die Zeitdauer t₁ des Druckimpulses 10 Millisekunden bis 5 Sekunden beträgt. Besonders vorteilhaft ist eine Zeit von 0,5 Sekunden.

Weiterhin ist es vorteilhaft wenn die Zeit t₂ zwischen zwei Druckimpulsen 10 Millisekunden bis 5 Sekunden beträgt. Besonders vorteilhaft ist eine Zeit von 0,5 Sekunden.

Vorteilhaft ist es wenn die Anzahl der hintereinander liegenden Druckimpulse einer Druckimpulsserie 1 bis 200 Druckimpulse beträgt. Besonders vorteilhaft sind vier hintereinanderliegende Druckimpulse. In einer alternativen Ausführung des Verfahrens sind 1 bis 100 Druckimpulse vorteilhaft.

Die Pausenzeit t₃ zwischen zwei Druckimpulsserien beträgt vorzugsweise 2 Sekunden bis 60 Minuten. Besonders bevorzugt beträgt die Pausenzeit t₃ eine Minute.
In einer besonders bevorzugten Ausführung des erfindungsgemäßen Verfahrens umfasst das Verfahren ferner die Schritte:
- Überwachen eines Verschmutzungsgrads des optischen Eintrittsfensters mittels eines Überwachungsmittels,
- Übertragen eines repräsentativen Signals an die Steuereinheit, sobald ein vorbestimmter Grenzwert des Verschmutzungsgrades überschritten wird, und
- Schalten des Ventils zur Abgabe des intermittierenden Gasstroms, vorzugsweise über eine Druckleitung und die Gasaustrittsöffnung auf das optische Eintrittsfenster so lange, bis der Verschmutzungsgrad die vorgegebene Grenze nicht mehr überschreitet.

Mit anderen Worten erfolgt die Ansteuerung des Ventils zur Freigabe des Gasstroms, zur Erzeugung der Druckimpulse, der Druckimpulsserien und zur Anzahl der Druckimpulse in der Druckimpulsserie durch die Steuereinheit in Abhängigkeit vom Verschmutzungsgrad des optischen Eintrittsfensters.

Der Verschmutzungsgrad wird vorzugsweise durch ein Überwachungsmittel ermittelt. Beim Überschreiten einer vorgegebenen Grenze eines Grenzwertes des Verschmutzungsgrades wird von dem Überwachungsmittel ein repräsentatives Signal an die Steuereinheit gegeben. Dieses Signal wird vorzugsweise vom Überwachungsmittel, oder vom Brandmelder selbst an die Steuereinheit gesendet. Die Steuereinheit erfasst in einer vorteilhaften Ausführung auch das Vorliegen eines Zustands, in dem der Verschmutzungsgrad einen vorgegebenen Grenzwert nicht (mehr) überschreitet. In diesem Fall wird die Spülung des optischen Eintrittsfensters mit dem intermittierenden Gasstrom reduziert oder unterbrochen.

Vorzugsweise wird das Verfahren dahingehend weitergebildet, dass nach dem Erfassen durch das Überwachungsmittel, dass die Verschmutzung den vorbestimmten Grenzwert nicht mehr überschreitet bzw. wieder unterschreitet, der Schritt ausgeführt wird:
- Fortgesetztes Zuführen des intermittierenden Gasstroms für eine vorbestimmte Nachspüldauer, vorzugsweise in einem Bereich von 1 Sekunde bis 10 Minuten, und
- Schalten des Ventils in die geschlossene Stellung nach Ende der Nachspüldauer.

Über die Steuersignale der Steuereinheit, die an das Ventil gesendet werden, werden die oben beschriebene Druckimpulse und die Druckimpulsfolge mit den Zeiten t₁, t₂ und t₃ realisiert.
Statt eines Magnetventils ist auch ein anderes Ventil, beispielsweise ein pneumatisch zu stellendes Ventil, denkbar.

Das Gasbereitstellungssystem ist so ausgebildet, dass der notwendige Druck der Druckimpulse zur Verfügung steht. Der Druck des Druckimpulses liegt in einer vorteilhaften Ausführungsvariante in einem Bereich zwischen 1 bis 30 bar, in einer weiteren vorteilhaften Ausführung liegt er in einem Bereich zwischen 2 und 10 bar. In einer besonders vorteilhaften Ausführungsvariante wird ein Druck von 5 bar verwendet.
Wie eingangs erwähnt, betrifft die Vorrichtung in einem weiteren Aspekt auch eine Vorrichtung zum Reinigen des optischen Eintrittsfensters eines Brandmelders.
Die Erfindung löst die ihr zugrundeliegende Aufgabe bei einer solchen Vorrichtung, indem diese mindestens eine Gasaustrittsöffnung zum Abgeben eines Gasstroms auf die Oberfläche des optischen Eintrittsfensters des Brandmelders, eine Steuereinheit, und ein Ventil umfasst, wobei die Steuereinheit signalleitend mit dem Ventil verbunden und dazu eingerichtet ist, das Ventil wahlweise in eine geöffnete oder geschlossene Stellung zu schalten, wobei das Ventil fluidleitend, vorzugsweise mittels einer Druckleitung, mit der mindestens einen Gasaustrittsöffnung verbunden ist, wobei die Steuereinheit dazu eingerichtet ist, das Ventil gemäß dem Verfahren nach einem der Verfahrensansprüche zu schaltern.

Die Gasaustrittsöffnung ist vorzugsweise mittels einer Druckleitung mit einem Gasbereitstellungssystem fluidleitend verbunden, von der aus Druckluft zu von der Steuereinheit vorgegebenen Zeiten (t₁, t₂, t₃) zur Gasaustrittsöffnung geführt wird.

Der Gasstrom kann ein oder mehrere Gase enthalten. Vorzugsweise wird Druckluft, welche ein Gasgemisch darstellt, verwendet. Das Gasbereitstellungssystem erzeugt den notwendigen Druck des Gasstromes. Durch Öffnen und Schließen des Ventils über die Ansteuerung von der Steuereinheit wird der Fluss des Gasstromes vom Gasbereitstellungssystem zu der mindestens einen Gasaustrittsöffnung freigegeben bzw. gesperrt und es werden Druckimpulse des Gasstroms und Druckimpulsserien mit vordefinierter Anzahl von Druckimpulsen erzeugt.
Die mindestens eine Gasaustrittsöffnung ist an einem Gasausbringungsmittel angeordnet.

Das Gasausbringungsmittel weist die mindestens eine Gasaustrittsöffnung zum Abgeben eines Gasstroms auf die Oberfläche des optischen Eintrittsfensters des Brandmelders auf. Weiterhin ist mindestens ein Anschluss der Druckleitung am Gasausbringungsmittel angeordnet der fluidleitend mit dem mindestens einen Gaseintrittskanal verbunden ist, der in der mindestens einen Gasaustrittsöffnung mündet. In einer vorteilhaften Ausführung stellt das Gasausbringungsmittel eine Düse oder einen Diffusor dar.

In vorteilhaften Ausführungsvarianten, in welchen 2, 3 oder 4 Gasaustrittsöffnungen angeordnet sind, sind eine entsprechende Anzahl von Düsen oder Diffusoren angeordnet und der Gasstrom wird direkt auf das optische Eintrittsfenster geleitet.

Das Gasausbringungsmittel ist dazu eingerichtet, einen intermittierenden Gasstrom aus der zumindest einer Gasaustrittsöffnung auf die Oberfläche des optischen Eintrittsfensters des Brandmelders mit einer Anzahl von Druckimpulsen auf das optische Eintrittsfenster auszubringen.

In der bevorzugten Ausführung der Vorrichtung weist das Gasausbringungsmittel drei Gaseintrittskanäle auf, die in drei Gasaustrittsöffnungen münden. In diesem Fall sind auch drei Anschlüsse für die Druckleitung am Gasausbringungsmittel angeordnet, die fluidleitend mit den Gaseintrittskanälen verbunden sind.

In einer vorteilhaften Ausgestaltung der Vorrichtung ist das Gasausbringungsmittel am Gehäuse des Brandmelders über Verbindungsmittel austauschbar angeordnet. In einer anderen Ausführungsvariante ist das Gasausbringungsmittel im Gehäuse des Brandmelders integriert.

In einer weiteren vorteilhaften Ausführung tritt der Gasstrom oder die Druckluft aus einer, das optische Eintrittsfenster, umlaufenden Öffnung aus. Diese ist der geometrischen Form des Eintrittsfensters angepasst. Beispielsweise ist es vorteilhaft für ein kreisförmiges Eintrittsfenster, einen ringförmig gestalteten Austrittsspalt als Gasaustrittsöffnung zu verwenden.

In einer vorteilhaften Ausführung wird das Gasausbringungsmittel zur Verteilung des Gasstroms auf das optische Eintrittsfenster, am Gehäuse des Brandmelders befestigt und als Aufsatzteil bezeichnet. Dieses Gasausbringungsmittel hat mindestens einen Anschluss für die Verbindung mit der Druckleitung, welche den Gasstrom, vorzugsweise die Druckluft vom Gasbereitstellungssystem, vorzugsweise einem Druckluftsystem zuführt. Besonders vorteilhaft sind 3 Anschlüsse, damit eine gleichmäßige Verteilung des Gasstroms bzw. der Druckluft, die aus den Gasaustrittsöffnungen auf das optische Eintrittsfenster geleitet wird, erreicht wird.

Besonders vorteilhaft ist die kreisförmige Anordnung der 3 Gasaustrittsöffnungen im Abstand von 120°.

In einer weiteren vorteilhaften Ausführung ist zwischen dem direkten Weg des Gastroms vom Anschluss des Aufsatzteils und dem optischen Eintrittsfenster ein Gasstromverteilungsmittel angeordnet, welcher dazu eingerichtet ist, den Gasstrom gleichmäßig zu verteilen, da im Bereich der Gasaustrittsöffnung ein Maximum des Druckwertes des Gasstroms vorhanden ist.

In einer weiteren vorteilhaften Ausgestaltung ist der Brandmelder mit dem Aufsatzteil über Verbindungselemente so verbunden, dass dieser durch Schnellmontage mit einer einfachen Drehbewegung mit dem Aufsatzteil verbunden oder abgenommen werden kann.

Die Ringspaltöffnung weist in einer weiteren vorteilhaften Ausführung an bestimmten Stellen des Umfanges des optischen Eintrittsfensters Verengungen auf, um gezielt eine Druckerhöhung in diesen Bereichen zu erzeugen.

Weiterhin ist die Steuereinheit angeordnet, die mit einem Ventil wie einem Magnetventil, oder einem elektrisch auslösbaren Ventil oder dem pneumatischen Ventil in Verbindung steht. Für die signalleitende Verbindung zwischen der Steuereinheit und dem Ventil sind vorzugsweise korrespondierende Leitungen, etwa elektrische Leitungen, vorgesehen. Alternativ oder zusätzlich ist die Steuereinheit dazu eingerichtet, das Ventil mittels Anregung von pneumatischen Steuerleitungen oder mittels kabelloser Datenübertragung, beispielsweise per Funk, zu schalten, abhängig vom ausgewählten Ventiltyp.

Das Ventil ist vorzugsweise in der Druckleitung angeordnet, die an ein Gasbereitstellungssystem anschließbar ist, oder Teil dessen ist. Das Gasbereitstellungssystem ist vorzugsweise ein Druckluftsystem. In einer bevorzugten Ausführungsform ist stromaufwärts von dem Ventil ein Druckgasspeicher angeordnet und fluidleitend mit dem Ventil verbunden. Mit anderen Worten ist der Druckgasspeicher dann zwischen dem Gasbereitstellungssystem und dem Ventil angeordnet.

Vorzugsweise ist ein weiteres Ventil, ein Absperrventil, zwischen dem Druckgasspeicher und dem Gasbereitstellungssystem angeordnet. Dieses Ventil dient als Absperrmöglichkeit bei Arbeiten an dem System, weiterhin kann hiermit die Luftzufuhr in der Pausenzeit t₃ zwischen zwei Druckimpulsserien verringert werden, um das Gasbereitstellungssystem nicht mit Druckstößen zu belasten.

In einer besonderen Ausführung ist das Absperrventil als Magnetventil ausgeführt und mit der elektronischen Steuereinheit verbunden.

Der Druckgasspeicher kann als eine oder mehrere Druckgasflasche(n) ausgebildet sein. Aus dieser Druckgasflasche kann das druckbeaufschlagte Gas zu den von der Steuereinheit vorgegebenen Zeiten oder Zeitintervallen zu der Gasaustrittsöffnung geleitet werden und aus dieser austreten.

Mit dem Gasbereitstellungssystem kann der Druckgasspeicher immer wieder aufgeladen werden. Dass kann in vorteilhafter Weise in der Zeit zwischen den Druckimpulsserien erfolgen. Geschieht diese Aufladung mit gedrosselter Durchflussmenge, bietet der Druckgasspeicher den Vorteil, dass das Gasbereitstellungssystem nicht mit den Druckimpulsen belastet wird.

In einer besonders bevorzugten Ausführung der erfindungsgemäßen Vorrichtung erfolgt die Ansteuerung des Ventils zur Freigabe des Gasstroms über mindestens eine Gasaustrittsöffnung über das optische Eintrittsfenster durch die Steuereinheit in Abhängigkeit vom Verschmutzungsgrad des optischen Eintrittsfensters. Die Steuereinheit ist in dieser Ausführungsform dazu eingerichtet, das Ventil in Abhängigkeit vom Verschmutzungsgrad des optischen Eintrittsfensters zu schalten.

Die Vorrichtung zum Reinigen des optischen Eintrittsfensters weist hierfür vorzugsweise ein Überwachungsmittel zur Überwachung des Verschmutzungsgrades des optischen Eintrittsfensters auf, welches signalleitend mit der Steuereinheit verbunden und dazu eingerichtet ist, ein repräsentatives Signal an die Steuereinheit bei Überschreiten eines vorgegebenen Grenzwerts des Verschmutzungsgrades zu übertragen, wobei die Steuereinheit dazu eingerichtet ist, bei Empfang des repräsentativen Signals das Ventil zur Abgabe des intermittierenden Gasstroms zu schalten.

In einer weiteren vorteilhaften Ausführung der Vorrichtung weist diese ein Überwachungsmittel zur Überwachung des Verschmutzungsgrades des optischen Eintrittsfensters auf, welches signalleitend mit der Steuereinheit verbunden und dazu eingerichtet ist, ein repräsentatives Signal an die Steuereinheit bei Überschreiten eines vorgegebenen Grenzwerts des Verschmutzungsgrades zu übertragen. Hierbei ist die Steuereinheit dazu eingerichtet, bei Empfang des repräsentativen Signals, das Ventil zur Abgabe des intermittierenden Gasstroms zu schalten, so lange, bis der Verschmutzungsgrad den vorgegebenen Grenzwert nicht mehr überschreitet oder in einem vorabdefinierten zulässigen Bereich liegt.

Das Überwachungsmittel, welches als Sensorüberwachungssystem ausgebildet sein kann oder Teil eines solchen Systems sein kann, ist vorzugsweise dazu eingerichtet, den Verschmutzungsgrad des optischen Eintrittsfensters zu messen. Ein bevorzugtes Überwachungsmittel weist Mittel zum Bestrahlen des optischen Eintrittsfensters mit elektromagnetischer Strahlung bei einer vorbestimmten Wellenlänge auf, vorzugsweise Strahlungsquellen im ultravioletten (UV) - und/oder im Infrarot (IR)-Bereich, sowie Mittel zum quantitativen Erfassen desjenigen Anteils der Strahlung, welcher von dem optischen reflektiert wird, und/oder Mittel zum quantitativen Erfassen desjenigen Anteils der Strahlung, der durch das optische Eintrittsfenster durchtritt, und/oder Mittel zum quantitativen Erfassen desjenigen Anteils der Strahlung, der bei Auftreffen auf das optische Eintrittsfenster absorbiert wird.

Die Mittel zum quantitativen Erfassen des Anteils der reflektierten, transmittierten oder der absorbierten Strahlung sind vorzugsweise Strahlungssensoren zur Erfassung elektromagnetischer Strahlung im ultravioletten (UV) - und/oder im Infrarot (IR)-Bereich. Weiterhin umfassen diese Mittel eine Signalverarbeitungseinheit. Diese umfasst einen Mikrocontroller oder einen Mikroprozessor, A/D und D/A Wandler und Speicherelemente, sowie Mittel zur Signalübertragung an die Steuereinheit über eine signalleitende Verbindung zwischen dem Überwachungsmittel und der Steuereinheit. In den Speicherelementen sind der vordefinierte Grenzwert des Verschmutzungsgrades des optischen Eintrittsfensters und/oder ein vordefinierter zulässiger Bereich hinterlegt.

In einer bevorzugten Ausführung stellen diese Strahlungssensoren die Strahlungssensoren des Brandmelders zur Erfassung der Brandkenngröße dar. In diesem Fall ist das Überwachungsmittel gleichzeitig ein Sensorüberwachungssystem. In einer weiteren bevorzugten Ausführung ist die Signalverarbeitungseinheit des Überwachungsmittels die Signalverarbeitungseinheit des Brandmelders. In diesem Fall stellt die signalleitende Verbindung zwischen dem Überwachungsmittel und der Steuereinheit die signalleitende Verbindung zwischen dem Brandmelder und der Steuereinheit dar.

Das Überwachungsmittel ist dazu ausgebildet, aus dieser quantitativen Erfassung heraus einen repräsentativen Zahlenwert darüber zu bestimmen, wie viel Strahlung im Vergleich zu einem vorab bestimmten unverschmutzten Zustand reflektiert bzw. transmittiert bzw. absorbiert wird, und diesen mit dem vorbestimmten Grenzwert abzugleichen. Bei Erreichen oder Überschreiten dieses Grenzwertes übermittelt das Überwachungsmittel sodann das repräsentative Signal an die Steuereinheit.

In einer weiteren vorteilhaften Ausführungsform der erfindungsgemäßen Vorrichtung, die insbesondere dann vorteilhaft zur Anwendung kommt, wenn der Brandmelder kein geeignetes Sensorüberwachungssystem zur Überwachung des Verschmutzungsgrades des optischen Eintrittsfensters des Brandmelders aufweist, ist die Steuereinheit dazu eingerichtet, das Ventil zur Abgabe des intermittierenden Gasstroms, insbesondere zur Erzeugung der Druckimpulse des Gasstroms, zu vorab definierten Zeiten zu schalten. Diese Schaltzeiten können periodisch oder in Abhängigkeit der Umgebungsbedingungen aperiodisch sein. Die Steuereinheit ist vorzugsweise mit diesen Zeiten vorprogrammiert oder über eine Eingabevorrichtung mit diesen Zeiten programmierbar.

Vorteilhaft ist es weiterhin, wenn vor und nach (stromaufwärts und stromabwärts von) dem Druckgasspeicher ein Druckmessgerät und ein Ventil angeordnet sind. Als Druckmessgerät ist ein Manometer geeignet.

Weiterhin ist vorzugsweise stromaufwärts von dem Ventil, besonders bevorzugt zwischen Druckgasspeicher und Gasbereitstellungssystem, ein Druckminderer angeordnet, mit dem der Betriebsdruck für den Druckgasspeicher eingestellt werden kann.

In einer bevorzugten Ausführungsform weist das Gasbereitstellungssystem einen Kompressor auf, zum Beispiel einen elektrischen Kompressor, der dazu eingerichtet ist, den Druckgasspeicher mit Gas zu befüllen.

Das erfindungsgemäße Verfahren und die Vorrichtung haben den Vorteil, dass das optische Eintrittsfenster eines Brandmelders intermittierend und entsprechend der Verschmutzungsintensität bei einem angepassten und geringen Verbrauch an Gas von Verschmutzungen befreit werden kann.

Durch einen Gasstrahl, der mit hoher Geschwindigkeit auf das optische Eintrittsfenster des Brandmelders auftrifft, bilden sich Wirbel, so dass Verschmutzungen auf der gesamten Oberfläche mit hoher Intensität erfasst und weggespült werden.

Im Folgenden wird die Erfindung anhand eines bevorzugten Ausführungsbeispiels unter Bezugnahme auf die beigefügten Figuren näher erläutert. Die Figuren zeigen:
- Figur 1:: Vorrichtung zur Reinigung eines optischen Eintrittsfensters in schematischer Darstellung, und
- Figur 2:: Schematische Darstellung von Druckimpulsen über der Zeit.

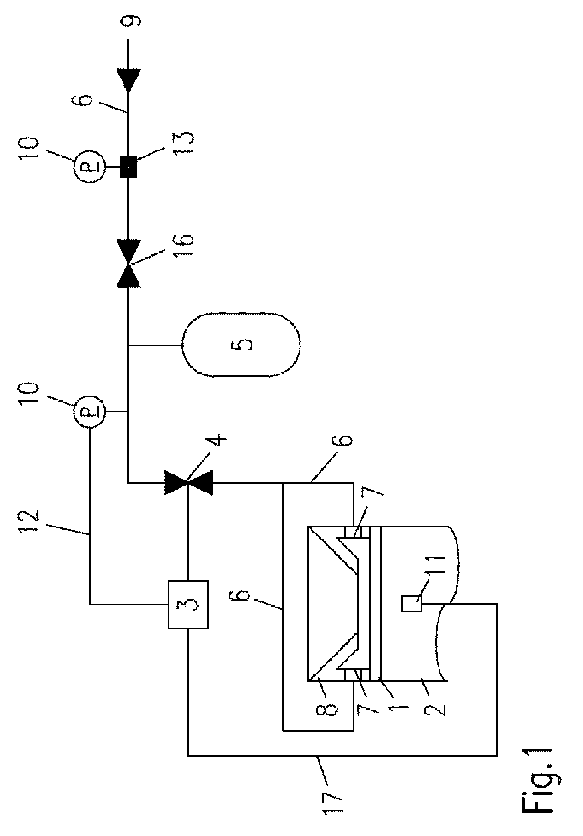

Die *Figur 1* zeigt schematisch eine erfindungsgemäße Vorrichtung zum Reinigen eines optischen Eintrittsfensters 1 eines Brandmelders 2 mittels einer Gasaustrittsöffnung 7 in einem Gasausbringungsmittel 8. Das Gasausbringungsmittel 8 ist so über dem optischen Eintrittsfenster 1 angebracht, dass seine kreisförmige Aussparung das optische Eintrittsfenster umfasst. Die kreisförmige Aussparung ist so bemessen, dass der Sichtwinkel der Sensoren (nicht dargestellt) des Brandmelders 2 zur Erfassung der Brandkenngröße elektromagnetische Strahlung nicht verkleinert wird. Dieser Sichtwinkel wird im Wesentlichen durch den Durchmesser des effektiv wirkenden optischen Eintrittsfensters, die sensitive Fläche der Sensoren und den Abstand der Sensoren zum optischen Eintrittsfenster vorgegeben.

Das Gasausbringungsmittel 8 weist zwei Gasaustrittsöffnungen 7 zum Abgeben eines Gasstroms auf die Oberfläche des optischen Eintrittsfensters 1 des Brandmelders 2 auf. Nicht dargestellt sind die zwei Anschlüsse der Druckleitung 6 am Gasausbringungsmittel, die fluidleitend mit dem jeweiligen Gaseintrittskanal verbunden sind, und in den Gasaustrittsöffnungen 7 münden.

Das Gasausbringungsmittel 8 ist dazu eingerichtet, einen intermittierenden Gasstrom aus den Gasaustrittsöffnungen 7 auf die Oberfläche des optischen Eintrittsfensters 1 des Brandmelders 2 mit einer Anzahl von Druckimpulsen 14 auf das optische Eintrittsfenster 1 auszubringen.

Es können aber auch mehrere Gasaustrittsöffnungen 7 in dem Gasausbringungsmittel 8 vorgesehen sein, beispielsweise 2, 3, 4, oder mehr.

Die Gasaustrittsöffnungen 7 im Gasausbringungsmittel 8 sind fluidleitend über einen fluidleitenden Gaseintrittskanal mit einem nicht dargestellten Anschluss für die Druckleitung 6 am Gasausbringungsmittel 8 verbunden, somit auch fluidleitend mit dieser Druckleitung 6 verbunden. In dieser dargestellten Ausführung ist die Druckleitung 6 als Druckluftleitung ausgebildet.

Die Druckluft wird von einem Gasbereitstellungssystem 9 geliefert, mit dem die Gasaustrittsöffnungen 7 fluidleitend über die Druckleitung 6 und einem Ventil 4 verbunden sind. Somit ist das Ventil 4 fluidleitend, vorzugsweise mittels der Druckleitung 6, mit den Gasaustrittsöffnungen 7 verbunden. In der Schaltstellung des Ventils 4 "auf" wird der Druckluftstrom zu den Gasaustrittsöffnungen 7 freigegeben, zum Abgeben eines Gasstroms aus dieser Gasaustrittsöffnung auf die Oberfläche des optischen Eintrittsfensters 1.

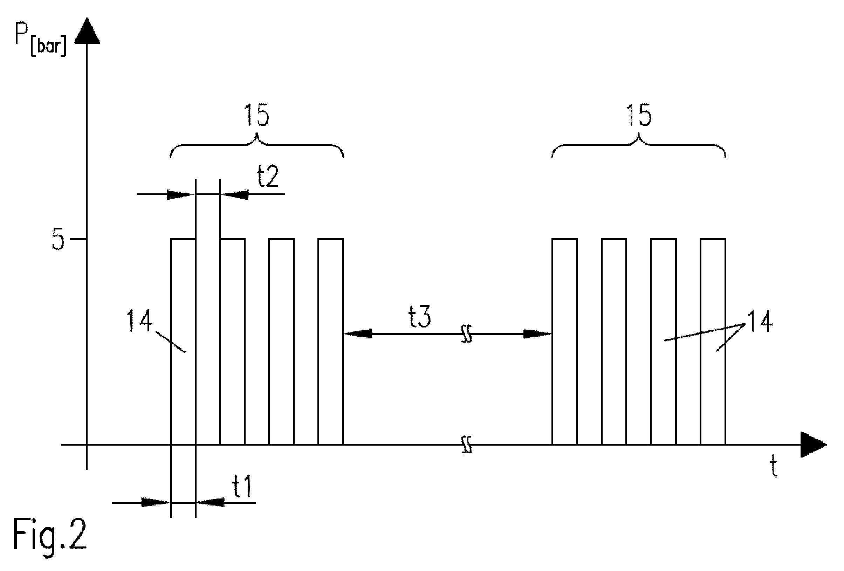

Die in Fig. 1 dargestellte erfindungsgemäße Vorrichtung umfasst ferner eine Steuereinheit 3, und das Ventil 4, wobei die Steuereinheit 3 signalleitend mit dem Ventil 4 verbunden und dazu eingerichtet ist, das Ventil 4 wahlweise in eine geöffnete oder geschlossene Stellung zu schalten. Hierbei ist die Steuereinheit 3 dazu eingerichtet das Ventil 4 derart anzusteuern, dass ein intermittierender Gasstrom aus der Gasaustrittsöffnung 7 auf die Oberfläche des optischen Eintrittsfensters 1 des Brandmelders 2 mit einer Anzahl von Druckimpulsen 14 (Fig. 2) auf das optische Eintrittsfenster 1 ausgebracht wird.

Das Ventil 4 ist in der dargestellten Ausführungsvariante als Magnetventil ausgeführt, welches durch die Steuereinheit 3, in diesem Fall ausgebildet als Brandmelder- und/oder Löschsteuerzentrale, über die signalleitende Verbindung gesteuert wird. Diese Brandmelder- und/oder Löschsteuerzentrale realisiert das Schalten des Ventils und in eine geöffnete Schaltstellung für die Zeitdauer t₁ der Druckimpulse 14, in eine geschlossen Schaltstellung für eine Zeit t₂ zwischen den Druckimpulsen 14 und für die Pausenzeit t₃ zwischen den Druckimpulsserien 15 sowie die Häufigkeit der Ansteuerung zur Erzeugung der Anzahl der Druckimpulse 14 innerhalb einer Druckimpulsserie 15 durch ihre Soft- und/oder Hardware.

Der Druckgasspeicher 5 ist über die Druckleitung 6 mit einem Gasbereitstellungssystem 9, ausgebildet als Druckluftsystem, verbunden, aus dem Druckluft, in der Pausenzeit t₃ zwischen zwei Druckimpulsserien 15, in den Druckgasspeicher 5, nachströmen kann. Vor und nach dem Druckgasspeicher 5 sind das Ventil 4 und das Absperrventil 16 und Manometer 10 angeordnet, die über elektrische Leitungen 12 mit der Steuereinheit 3 verbunden sein können. Dadurch ist es möglich das Ventil 4 und das Absperrventil 16 in Abhängigkeit vom gemessenen Druck zu steuern. Das Absperrventil ist im dargestellten Beispiel ein Handventil und nicht durch eine Leitung mit der Steuereinheit 3 verbunden.

Zwischen dem Gasbereitstellungssystem 9 und dem Ventil 4 ist ein Druckminderer 13 angeordnet, mit dem der Betriebsdruck für den Druckgasspeicher 5 eingestellt werden kann.

Der Brandmelder 2 weist ein Überwachungsmittel 11 auf, das mit der Steuereinheit 3 über eine signalleitende Verbindung 17 verbunden ist. Diese signalleitende Verbindung 17 kann über elektrische Leitungen oder kabellos, beispielsweise per Funk, realisiert werden.

Nicht dargestellt ist eine weitere bevorzugte Ausführung der Vorrichtung, dass die Signalverarbeitung des Sensorüberwachungssystems bzw. Überwachungsmittels von der elektronischen Schaltung des Brandmelders 2 durchgeführt wird. In diesem Fall stellt die signaltechnische Verbindung 17 die signaltechnische Verbindung des Brandmelders mit der Steuereinheit dar.

Über die signaltechnische Verbindung 17 sendet das Überwachungsmittel 11 ein repräsentatives Signal an die Steuereinheit 3, welches ein Maß für die Verschmutzung des optischen Eintrittsfensters 1 ist. Dieses Maß kann als Grenzwert vorgegeben sein oder ein quantitativen oder relativen momentanen Wert darstellen. Bei Verschmutzen des optischen Eintrittsfensters 1 über ein bestimmtes Maß hinaus, beispielsweise bei Überschreiten eines vorgegebenen Grenzwertes, löst die Steuereinheit 3 über ihre implementierte Software durch Senden von Steuersignalen an das Ventil 4, gezielt einen intermittierenden Gasstrom mit Druckimpulsen 14, vorzugsweise in mehreren Druckimpulsserien 15, mit den Zeiten t₁, t₂ und t₃ aus (Figur 2). In der dargestellten Ausführung erfolgt dies so lange bis das Sensorüberwachungssystem 11 keine unzulässige Verschmutzung mehr feststellt, d.h. der Verschmutzungsgrad in einem vorabdefinierten zulässigen Bereich liegt.

Alternativ oder zusätzlich löst die Steuereinheit 3 auf Basis eines vorbestimmten, vorzugsweise programmtechnisch in der Steuereinheit 3 hinterlegten Zeitschaltplans die Druckimpulse 14 und Druckimpulsserien 15 für einen vorgegeben Zeitraum aus. Dies ermöglicht eine Reinigung auch ohne Feststellung eines bestimmten Verschmutzungsgrades mittels des Überwachungsmittels 11 und gewährleistet die Reinigungsfunktion auch in Fällen, in denen das Überwachungsmittel 11 nicht funktioniert oder kein Überwachungsmittel vorhanden ist.
Die *Figur* 2 zeigt in schematischer Darstellung einen Auszug aus mehreren Druckimpulsserien 15 am Beispiel von 2 Druckimpulsserien 15, welche jeweils 4 Druckimpulse beinhalten. Es ist dargestellt die Zeitdauer t₁ der Druckimpulse 14 auf einer Zeitachse. Druckimpulse 14 stellen den Druck dar, mit dem die Druckluft in einer durch die Steuereinheit 3 vorgegebenen Zeit über die Gasaustrittsöffnungen 7 auf das optische Eintrittsfenster 1 einwirkt.
Mehrere Druckimpulse 14 bilden eine Druckimpulsserie 15. In Fig. 2 sind beispielhaft zwei Druckimpulsserien 15 dargestellt. Jeder Druckimpuls 14 dauert eine vorgegebene Zeit t₁, das heißt beim ersten Druckimpuls 14 wirkt die Druckluft etwa 0,5 Sekunden auf das Eintrittsfenster 1. Dem folgt eine Zeit t₂ zwischen den Druckluftimpulsen 14, in der keine Druckluft auf das Eintrittsfenster 1 wirkt. Im dargestellten Fall ist t₂ = t₁ = 0,5 s. In Figur 1 sind vier Druckimpulse 14 und deren Zeitdauer t₁ und drei Zeiten t₂ zwischen den Druckimpulsen 14 dargestellt. Diese Druckimpulse 14 bilden eine Druckimpulsserie 15. Nach der Druckimpulsserie 15, die 3,5 Sekunden dauert, folgt die Pausenzeit t₃ zwischen den Druckimpulsserien 15. Diese beträgt in der Darstellung 10 Minuten. Danach folgt eine weitere Druckimpulsserie 15.
Selbstverständlich ist die Erfindung auch für Brandmelder 2 anwendbar, die kein Überwachungsmittel 11 zur Erfassung des Verschmutzungsgrades des Eintrittsfensters 1 aufweisen. In diesem Fall erfolgt die Ansteuerung des Ventils 4 durch die Steuereinheit 3 zu vordefinierten Zeiten und mit einer vorgegebenen Häufigkeit und Zeitdauer, die an die Umgebungsbedingungen der Verschmutzungsverursachung angepasst sind.
Sollte sich die Verschmutzungsintensität durch Umwelteinflüsse oder ähnliches grundsätzlich ändern, können durch Programmierung der Steuereinheit 3 die Parameter der Zeit t₁, t₂ und t₃ angepasst werden.

### Liste der verwendeten Bezugszeichen

- 1: optisches Eintrittsfenster
- 2: Brandmelder
- 3: Steuereinheit
- 4: Ventil
- 5: Druckgasspeicher
- 6: Druckleitung
- 7: Gasaustrittsöffnung
- 8: Gasausbringungsmittel
- 9: Gasbereitstellungssystem,
- 10: Manometer
- 11: Überwachungsmittel
- 12: elektrische Leitung
- 13: Druckminderer
- 14: Druckimpuls
- 15: Druckimpulsserie
- 16: Absperrventil
- 17: signalleitende Verbindung
- t₁: Zeitdauer eines Druckimpulses 14
- t₂: Zeitdauer zwischen zwei Druckimpulsen 14
- t₃: Pausenzeit zwischen zwei Druckimpulsserien 15

## Patentansprüche

1. Verfahren zum Reinigen eines optischen Eintrittsfensters (1) eines Brandmelders (2), umfassend die Schritte:
- Abgeben eines intermittierenden Gasstroms aus zumindest einer Gasaustrittsöffnung (7) auf die Oberfläche des optischen Eintrittsfensters (1) des Brandmelders (2), wobei
- der intermittierende Gasstrom mit mehreren Druckimpulsen (14) auf das optische Eintrittsfenster (1) ausgebracht wird, **dadurch gekennzeichnet, dass** die mehreren Druckimpulse (14) Druckimpulsserien (15) mit einer Zeit (t₂) zwischen zwei aufeinander folgenden Druckimpulsen (14) einer Druckimpulsserie (15) bilden, wobei zwischen den Druckimpulsserien (15) eine Pausenzeit (t₃) besteht, wobei zum Abgeben des Gasstroms aus der Gasaustrittsöffnung (7) ein Ventil (4) vorgesehen ist, und wobei das Verfahren ferner die Schritte umfasst:
- Schalten des Ventils (4) in eine geöffnete Stellung für die Zeitdauer (t₁) eines Druckimpulses (14),
- Schalten des Ventils (4) in eine geschlossene Stellung für die Zeit (t₂) zwischen zwei Druckimpulsen (14), und für die Pausenzeit (t₃) zwischen zwei Druckimpulsserien (15), wobei diese Schaltschritte von einer Steuereinheit (3) mittels Senden von korrespondierenden Steuersignalen von der Steuereinheit (3) an das Ventil (4) ausgeführt werden.

2. Verfahren nach Anspruch 1,
**dadurch gekennzeichnet, dass** die Zeitdauer (t₁) des Druckimpulses (14) 10 Millisekunden bis 5 Sekunden beträgt.

3. Verfahren nach einem der vorstehenden Ansprüche,
**dadurch gekennzeichnet, dass** die Zeit (t₂) zwischen zwei Druckimpulsen (14) 10 Millisekunden bis 5 Sekunden beträgt.

4. Verfahren nach einem der vorstehenden Ansprüche,
**dadurch gekennzeichnet, dass** die Anzahl der hintereinander liegenden Druckimpulse (14) einer Druckimpulsserie (15) ein bis zehn Druckimpulse (14) beträgt.

5. Verfahren nach einem der vorstehenden Ansprüche,
**dadurch gekennzeichnet, dass** die Pausenzeit (t₃) zwischen zwei Druckimpulsserien (15) 2 Sekunden bis 60 Minuten beträgt.

6. Verfahren nach einem der vorstehenden Ansprüche,
umfassend die Schritte:
- Überwachen eines Verschmutzungsgrads des optischen Eintrittsfensters (1) mittels eines Überwachungsmittels,
- Übertragen eines repräsentativen Signals an die Steuereinheit (3), sobald ein vorbestimmter Grenzwert des Verschmutzungsgrads überschritten wird, und
- Schalten des Ventils (4) zur Abgabe des intermittierenden Gasstroms, vorzugsweise über eine Druckleitung (6) und die Gasaustrittsöffnung (7) auf das optische Eintrittsfenster (1), so lange, bis der Verschmutzungsgrad die vorgegebene Grenze nicht mehr überschreitet.

7. Verfahren nach einem der vorstehenden Ansprüche,
**dadurch gekennzeichnet, dass** der Druck des Druckimpulses (14) 2 bis 10 bar beträgt.

8. Vorrichtung zum Reinigen eines optischen Eintrittsfensters (1) eines Brandmelders (2), umfassend
- mindestens eine Gasaustrittsöffnung (7) zum Abgeben eines Gasstroms auf die Oberfläche des optischen Eintrittsfensters (1) des Brandmelders (2),
- eine Steuereinheit (3), und
- ein Ventil (4), wobei
die Steuereinheit (3) signalleitend mit dem Ventil (4) verbunden und dazu eingerichtet ist, das Ventil (4) wahlweise in eine geöffnete oder geschlossene Stellung zu schalten, wobei das Ventil (4) fluidleitend, vorzugsweise mittels einer Druckleitung (6), mit der mindestens einen Gasaustrittsöffnung (7) verbunden ist,
wobei die Steuereinheit (3) dazu eingerichtet ist, das Ventil (4) gemäß dem Verfahren nach einem der vorstehenden Ansprüche zu schalten.

9. Vorrichtung nach Anspruch 8,
mit einem signalleitend mit der Steuereinheit (3) verbundenen Überwachungsmittel (11), das dazu eingerichtet ist, den Verschmutzungsgrad des optischen Eintrittsfensters (1) zu erfassen, und ein repräsentatives Signal an die Steuereinheit (3) zu übertragen, sobald ein vorbestimmter Grenzwert des Verschmutzungsgrads überschritten wird, und wobei die Steuereinheit dazu eingerichtet ist, das Ventil (4) zur Abgabe des intermittierenden Gasstroms zu schalten, sobald die Steuereinheit (3) das repräsentative Signal empfängt.

10. Vorrichtung nach Anspruch 8,
**dadurch gekennzeichnet dass** sie ein Überwachungsmittel (11) zur Überwachung des Verschmutzungsgrades des optischen Eintrittsfensters (1) aufweist, welches signalleitend mit der Steuereinheit (3) verbunden und dazu eingerichtet ist, ein repräsentatives Signal an die Steuereinheit (3) bei Überschreiten eines vorgegebenen Grenzwerts des Verschmutzungsgrades zu übertragen, wobei die Steuereinheit (3) dazu eingerichtet ist, bei Empfang des repräsentativen Signals das Ventil (4) zur Abgabe des intermittierenden Gasstroms zu schalten, so lange, bis der Verschmutzungsgrad den vorgegebenen Grenzwert nicht mehr überschreitet oder in einem vorabdefinierten zulässigen Bereich liegt.

11. Vorrichtung nach einem der Ansprüche 8 bis 10, **dadurch gekennzeichnet, dass** stromaufwärts von dem Ventil (4) ein Druckgasspeicher (5) angeordnet und fluidleitend mit dem Ventil (4) verbunden ist.

12. Vorrichtung nach einem der Ansprüche 8, bis 11, **dadurch gekennzeichnet, dass** stromaufwärts von dem Ventil (4) ein Druckminderer (13) angeordnet ist, mit dem der Betriebsdruck für den Druckgasspeicher (5) eingestellt werden kann.

13. Vorrichtung nach einem der Ansprüche 8 bis 12,
**dadurch gekennzeichnet, dass** die Steuereinheit (3) dazu eingerichtet ist, das Ventil (4) in Abhängigkeit vom Verschmutzungsgrad des optischen Eintrittsfensters zu schalten.

## Claims

1. A method for cleaning an optical entry window (1) of a fire detector (2), comprising the steps:
- discharging an intermittent gas stream from at least one gas exit opening (7) onto the surface of the optical entry window (1) of the fire detector (2), wherein
- the intermittent gas stream having a plurality of pressure pulses (14) is discharged onto the optical entry window (1),
**characterized in that** the plurality of pressure pulses (14) form pressure-pulse series (15) with a time (t₂) between two subsequent pressure pulses (14) of a pressure-pulse series (15), and a pause time (t₃) exists between the pressure-pulse series (15), wherein for discharging the gas stream from the gas exit opening (7) a valve (4) is provided, and wherein the method further comprises the steps:
- switching the valve (4) into an open position for the duration (t₁) of a pressure pulse (14),
- switching the valve (4) into a closed position for the time (t₂) between two pressure pulses (14), and for the pause time (t₃) between two pressure-pulse series (15), wherein these switching steps are carried out by a control unit (3) by means of transmitting corresponding control signals from the control unit (3) to the valve (4).

2. The method according to Claim 1,
**characterized in that** the duration (t₁) of the pressure pulse (14) amounts to 10 milliseconds up to 5 seconds.

3. The method according to one of the preceding claims,
**characterized in that** the time (t₂) between two pressure pulses (14) amounts to 10 milliseconds up to 5 seconds.

4. The method according to one of the preceding claims,
**characterized in that** the number of subsequent pressure pulses (14) of a pressure-pulse series (15) amounts to one to ten pressure pulses (14).

5. The method according to one of the preceding claims,
**characterized in that** the pause time (t₃) between two pressure-pulse series (15) amounts to 2 seconds up to 60 minutes.

6. The method according to one of the preceding claims,
comprising the steps:
- monitoring a degree of contamination of the optical entry window (1) by means of a monitoring means,
- transmitting a representative signal to the control unit (3) as soon as a predetermined limit value of the degree of contamination is exceeded, and
- switching the valve (4) for discharging the intermittent gas stream, preferably via a pressure line (6) and the gas exit opening (7) onto the optical entry window (1) until the degree of contamination no longer exceeds the predetermined limit.

7. The method according to one of the preceding claims,
**characterized in that** the pressure of the pressure pulse (14) amounts to 2 to 10 bar.

8. An apparatus for cleaning an optical entry window (1) of a fire detector (2), comprising
- at least one gas exit opening (7) for discharging a gas stream onto the surface of the optical entry window (1) of the fire detector (2),
- a control unit (3), and
- a valve (4), wherein
the control unit (3) is connected in a signal-conducting manner to the valve (4) and designed to switch the valve (4) selectively into an open or closed position, wherein the valve (4) is connected in a fluid-conducting manner, preferably by means of a pressure line (6), to the at least one gas exit opening (7),
wherein the control unit (3) is designed to switch the valve (4) in accordance with the method according to one of the preceding claims.

9. The apparatus according to Claim 8,
with a monitoring means (11) connected in a signal-conducting manner to the control unit (3) and designed to detect the degree of contamination of the optical entry window (1) and to transmit a representative signal to the control unit (3) as soon as a predetermined limit value of the degree of contamination is exceeded, and wherein the control unit is designed to switch the valve (4) for discharging the intermittent gas stream, as soon as the control unit (3) receives the representative signal.

10. The apparatus according to Claim 8,
**characterized in that** it exhibits a monitoring means (11) for monitoring the degree of contamination of the optical entry window (1), that is connected to the control unit (3) in a signal-conducting manner and is designed to transmit a representative signal to the control unit (3) when a pre-specified limit value of the degree of contamination is exceeded, wherein the control unit (3) is designed to switch the valve (4) to output the intermittent gas stream when receiving the representative signal until the degree of contamination no longer exceeds the pre-specified limit value or is in a pre-defined admissible range.

11. The apparatus according to one of Claims 8 to 10, **characterized in that** a pressurized-gas reservoir (5) is arranged upstream from the valve (4) and connected to the valve (4) in a fluid-conducting manner.

12. The apparatus according to one of Claims 8 to 11, **characterized in that** a pressure-reducing valve (13) is arranged upstream from the valve (4) and can be used to set the operating pressure for the pressurized-gas reservoir (5).

13. The apparatus according to one of Claims 8 to 12,
**characterized in that** the control unit (3) is designed to switch the valve (4) as a function of the degree of contamination of the optical entry window.

## Revendications

1. Procédé de nettoyage d'une fenêtre d'entrée optique (1) d'un détecteur d'incendie (2), comprenant les étapes suivantes :
- délivrance d'un courant de gaz intermittent par au moins un orifice de sortie de gaz (7) sur la surface de la fenêtre d'entrée optique (1) du détecteur d'incendie (2),
- le courant de gaz intermittent étant appliqué avec plusieurs impulsions de pression (14) sur la fenêtre d'entrée optique (1),
**caractérisé en ce que** lesdites plusieurs impulsions de pression (14) forment des salves d'impulsions de pression (15), avec un temps (t₂) entre deux impulsions de pression successives (14) d'une salve d'impulsions de pression (15),
les salves d'impulsions de pression (15) étant séparées par un temps de pause (t₃), une vanne (4) étant prévue pour la délivrance du courant de gaz par l'orifice de sortie de gaz (7), et le procédé comprenant en outre les étapes suivantes :
- commutation de la vanne (4) en position ouverte pour la durée (t₁) d'une impulsion de pression (14),
- commutation de la vanne (4) en position fermée durant le temps (t₂) séparant deux impulsions de pression (14) et durant le temps de pause (t₃) entre deux salves d'impulsions de pression (15), ces étapes de commutation étant exécutées par une unité de commande (3) au moyen de l'émission de signaux de commande correspondants de l'unité de commande (3) à la vanne (4).

2. Procédé selon la revendication 1,
**caractérisé en ce que** la durée (t₁) de l'impulsion de pression (14) est de 10 millisecondes à 5 secondes.

3. Procédé selon l'une des revendications précédentes,
**caractérisé en ce que** le temps (t₂) entre deux impulsions de pression (14) est de 10 millisecondes à 5 secondes.

4. Procédé selon l'une des revendications précédentes,
**caractérisé en ce que** le nombre d'impulsions de pression successives (14) d'une salve d'impulsions de pression (15) est de une à dix impulsions de pression (14).

5. Procédé selon l'une des revendications précédentes,
**caractérisé en ce que** le temps de pause (t₃) entre deux salves d'impulsions de pression (15) est de 2 secondes à 60 minutes.

6. Procédé selon l'une des revendications précédentes,
comprenant les étapes suivantes :
- surveillance du degré d'encrassement de la fenêtre d'entrée optique (1) à l'aide d'un moyen de surveillance,
- transmission d'un signal représentatif à l'unité de commande (3) dès qu'une valeur limite prédéterminée du degré d'encrassement est dépassée, et
- commutation de la vanne (4) en vue de la délivrance du courant de gaz intermittent, de préférence par une conduite sous pression (6) et l'orifice de sortie de gaz (7), sur la fenêtre d'entrée optique (1) jusqu'à ce que le degré d'encrassement ne dépasse plus la limite imposée.

7. Procédé selon l'une des revendications précédentes,
**caractérisé en ce que** la pression de l'impulsion de pression (14) est de 2 à 10 bars.

8. Dispositif de nettoyage d'une fenêtre d'entrée optique (1) d'un détecteur d'incendie (2), comprenant :
- au moins un orifice de sortie de gaz (7) en vue de la délivrance d'un courant de gaz à la surface de la fenêtre d'entrée optique (1) du détecteur d'incendie (2),
- une unité de commande (3) et
- une vanne (4),
l'unité de commande (3) étant reliée par voie de signaux à la vanne (4) et configurée de manière à faire commuter la vanne (4) en position ouverte ou fermée, au choix, la vanne (4) étant reliée par voie fluidique, de préférence au moyen d'une conduite sous pression (6), audit au moins un orifice de sortie de gaz (7),
l'unité de commande (3) étant configurée de manière à faire commuter la vanne (4) conformément au procédé conforme à l'une des revendications précédentes.

9. Dispositif selon la revendication 8,
comportant un moyen de surveillance (11) relié par voie de signaux à l'unité de commande (3) et configuré de manière à détecter le degré d'encrassement de la fenêtre d'entrée optique (1) et à transmettre un signal représentatif à l'unité de commande (3) dès qu'une valeur limite prédéterminée du degré d'encrassement est dépassée, et l'unité de commande (3) étant configurée de manière à faire commuter la vanne (4) en vue de la délivrance du courant de gaz intermittent dès que l'unité de commande (3) reçoit le signal représentatif.

10. Dispositif selon la revendication 8,
**caractérisé en ce qu'**il présente pour la surveillance du degré d'encrassement de la fenêtre d'entrée optique (1) un moyen de surveillance (11) relié par voie de signaux à l'unité de commande (3) et configuré de manière à transmettre un signal représentatif à l'unité de commande (3) en cas de dépassement d'une valeur limite imposée du degré d'encrassement, l'unité de commande (3) étant configurée de manière à faire commuter la vanne (4) à la réception du signal représentatif en vue de la délivrance du courant de gaz intermittent jusqu'à ce que le degré d'encrassement ne dépasse plus la valeur limite imposée ou se situe dans une plage admissible prédéfinie.

11. Dispositif selon l'une des revendications 8 à 10, **caractérisé en ce qu'**en amont de la vanne (4) est disposé un accumulateur de gaz sous pression (5) relié par voie fluidique à la vanne (4).

12. Dispositif selon l'une des revendications 8 à 11, **caractérisé en ce qu'**en amont de la vanne (4) est disposé un détendeur (13) permettant de régler la pression de service de l'accumulateur de gaz sous pression (5).

13. Dispositif selon l'une des revendications 8 à 12,
**caractérisé en ce que** l'unité de commande (3) est configurée de manière à faire commuter la vanne (4) en fonction du degré d'encrassement de la fenêtre d'entrée optique.
